# EUROPEAN PATENT APPLICATION

(11) **EP 1 236 934 A1**
(43) Date of publication of application: **04.09.2002**
(21) Application number: 02004698.3
(22) Date of filing: 28.02.2002
(51) Int. Cl.: F16H 55/36

(54) **Pulley assembly for a vehicle internal combustion engine**

(30) Priority: 02.03.2001 IT TO010036 U
(71) Applicant: DAYCO EUROPE S.r.l., 64010 Colonnella (Teramo) (IT)
(72) Inventor: Rolando, Adriano, 10086 Rivarolo (IT); Ronchetto, Roberto, 10082 Cuorgne (IT)
(74) Representative: Franzolin, Luigi

(57) **Abstract**

A pulley assembly (4) for a vehicle internal combustion engine (1), having a timing gear (5), and a pulley (6) for driving at least one auxiliary member of the engine by means of a belt; the gear (5) and the pulley (6) are coaxial and connected to form a preassembled subassembly connectable to the drive shaft by means of a single screw (8).

## Description

The present invention relates to a pulley assembly for a vehicle internal combustion engine.

As is known, internal combustion engines are equipped with a timing gear fixed to one end of the drive shaft by an axial screw and normally defined by a toothed pulley for controlling synchronous rotation of the camshaft by means of a toothed belt. The toothed pulley is normally fitted with a multiple-groove or so-called poly-V pulley for driving auxiliary engine components, such as the water pump, alternator and air-conditioning system compressor (if any), by means of a belt, and which normally has a built-in damper defined by an annular element of elastomeric material interposed between the hub and rim of the pulley to absorb violent transient torque states.

The above pulleys are also normally provided with a impulse wheel for detecting the rotation speed and phase of the drive shaft, and which is normally fixed to or integral with the poly-V pulley.

The poly-V pulley is normally fitted to the toothed pulley after this is fitted to the engine, i.e. screwed to the drive shaft, using further fastening members.

According to known technology, the pulleys (and possibly also the impulse wheel) are therefore independent parts supplied separately to vehicle manufacturers for on-vehicle assembly, thus increasing component part control costs and the overall time and cost required for assembly.

It is an object of the present invention to provide a pulley assembly designed to eliminate the aforementioned drawbacks typically associated with known technology.

According to the present invention, there is provided a pulley assembly for a vehicle internal combustion engine, comprising a timing gear, at least one pulley for driving at least one auxiliary member of the engine by means of a belt, and connecting means for connecting said gear and said pulley to a drive shaft of said engine; characterized by comprising preliminary retaining means for connecting said gear, said pulley and said connecting means to form a preassembled subassembly connectable to the drive shaft in one assembly operation.

Three non-limiting embodiments of the present invention will be described by way of example with reference to the accompanying drawings, in which:
Figure 1 shows an elevation and partial axial section of a pulley assembly in accordance with the present invention and fitted to a drive shaft of an internal combustion engine;
Figure 2 shows a larger-scale detail of Figure 1 prior to assembly;
Figure 3 shows a partial axial section of a second embodiment of a pulley assembly in accordance with the present invention;
Figure 4 shows an elevation and partial axial section of a third embodiment of a pulley assembly in accordance with the present invention.

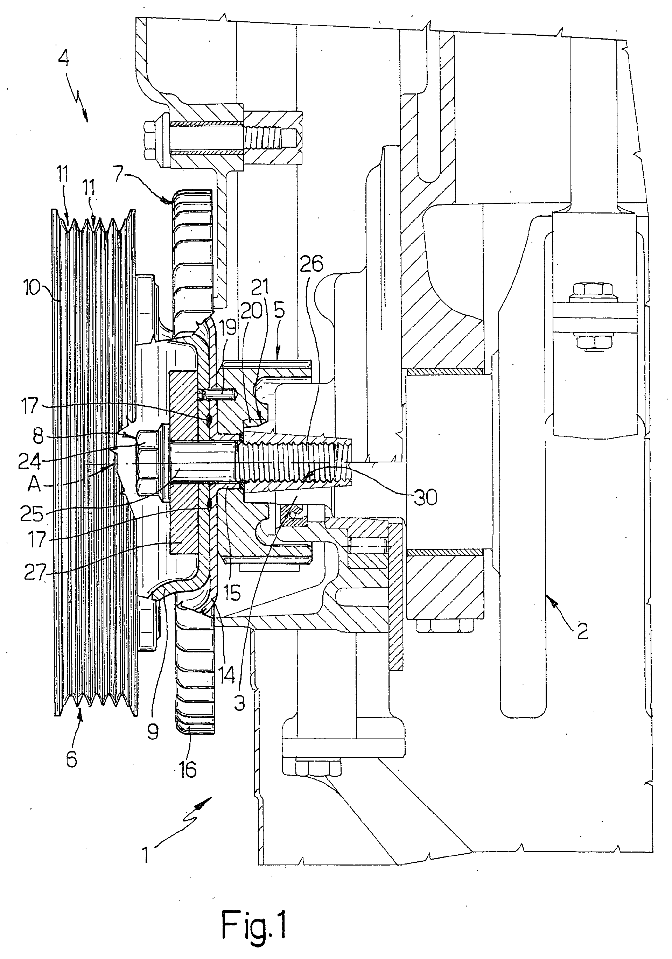

Number 1 in Figure 1 indicates a vehicle internal combustion engine (shown partly) comprising a drive shaft 2, one axial end 3 of which is fitted with a pulley assembly 4 in accordance with the present invention.

Pulley assembly 4 substantially comprises a timing gear 5 defined, for example, by a toothed pulley; a multiple-groove or poly-V pulley 6; and a impulse wheel 7 interposed axially between pulleys 5 and 6 and forming part of a known injection-control device for detecting the speed and angular position (phase) of drive shaft 3.

Pulleys 5, 6 and impulse wheel 7 are mounted on a screw 8, of axis A, which acts as a common supporting element and by which pulley assembly 4 as a whole is fitted to drive shaft 2.

More specifically, pulley 6 comprises a disk 9 with a central hole; and a peripheral rim 10 having a number of grooves 11 cooperating with a belt (not shown) for driving auxiliary members of the engine. Rim 10 is conveniently connected to disk 9 by a damping ring (not shown) made of elastomeric material.

Impulse wheel 7 comprises a flat disk 14 having an integral inner tubular hub 15; and a peripheral indented rim 16.

Disk 9 of pulley 6 and disk 14 of impulse wheel 7 are positioned contacting each other and are joined by a number of weld spots 17, so that pulley 6 and impulse wheel 7 are integral with each other; and rim 10 and hub 15 are located on axially opposite sides of respective disks 9, 14.

Toothed pulley 5 is fitted to tubular hub 15 of impulse wheel 7 in a predetermined angular position, with respect to impulse wheel 7, defined by a locating pin 19. Toothed pulley 5 also has a locating element 20 unequivocally defining, in use, the angular position of the pulley with respect to drive shaft 2, and therefore also the angular position of impulse wheel 7. The locating element may be defined by an inner key 20 integral with hub 15 and engaging a corresponding seat 21 formed in known manner on the periphery of end 3 of drive shaft 2.

Screw 8 comprises a head 24; a smooth cylindrical intermediate portion 25; and a threaded end 26.

Pulleys 5, 6 and impulse wheel 7 are fitted to intermediate portion 25 of screw 8, with pulley 6 on the head 24 side; and a flat annular washer 27 is interposed between head 24 and disk 9 of pulley 6.

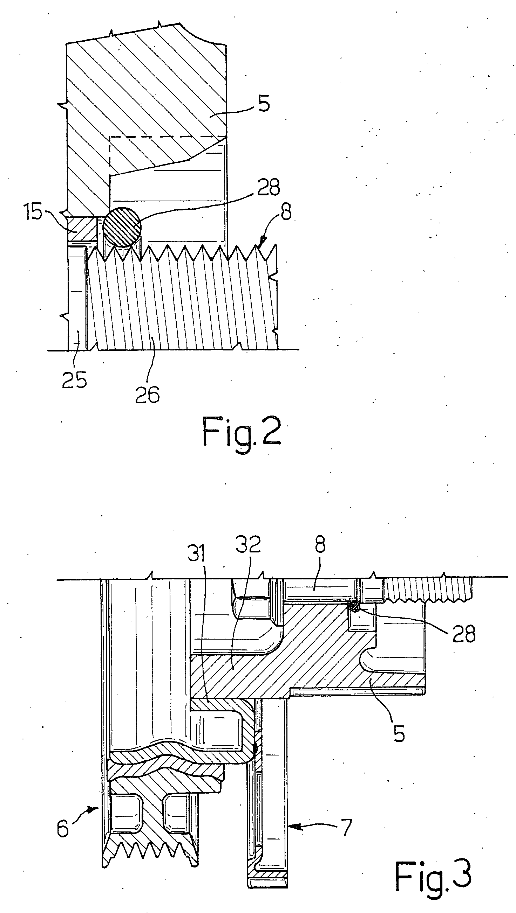

Assembly 4 is preassembled as described above, and a retaining member 28 is conveniently provided to prevent axial withdrawal of screw 8 when handling the assembly prior to assembly to engine 1. Retaining member 28 may be defined by a straightforward retaining ring (O-ring) of elastomeric material (Figure 2) fitted axially adjacent to hub 15 of impulse wheel 7, at the start of threaded end 26 of screw 8.

According to the present invention, assembly 4 is supplied in the form of a preassembled subassembly, and is fitted to end 3 of the drive shaft by simply screwing screw 8 inside a corresponding threaded axial hole 30 in drive shaft 2. When so doing, retaining ring 28, which no longer serves any purpose, may be disposed of.

Pin 19 and key 20 simply provide for defining the relative angular positions of drive shaft 2, toothed pulley 5 (controlling the timing system) and impulse wheel 7 (controlling fuel injection); and the drive torque is transmitted by friction from drive shaft 2 to pulleys 5, 6 by virtue of the axial grip exerted by washer 27.

Figure 3 shows a second embodiment of the present invention, in which impulse wheel 7 is again welded to pulley 6, but in which pulley 6 has a tubular hub 31 forced onto a cylindrical portion 32 of toothed pulley 5.

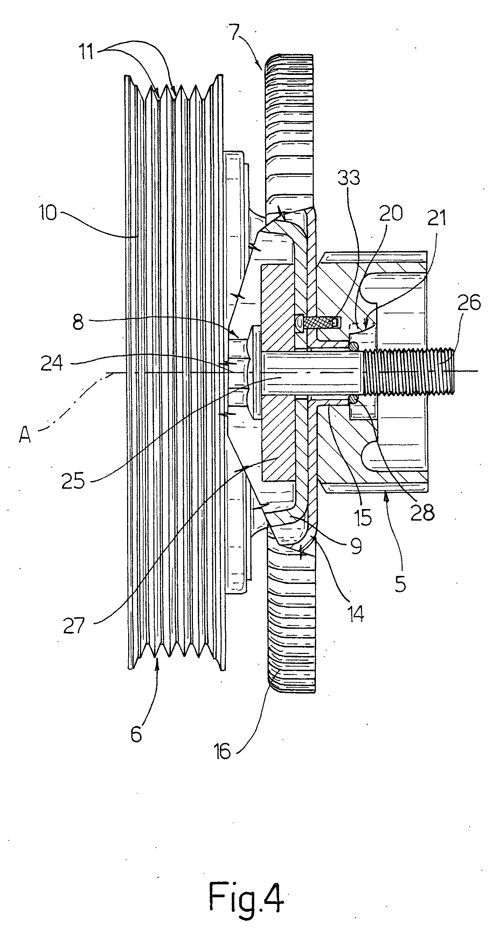

Figure 4 shows a third embodiment of the present invention, which differs from that in Figure 1 by weld spots 17 and pin 19 being replaced with one or more studs 33 inserted inside toothed pulley 5 to fix pulley 6 and impulse wheel 7 to toothed pulley 5 and unequivocally define the relative angular position of toothed pulley 5 and impulse wheel 7.

Clearly, changes may be made to the assembly as described and illustrated herein without, however, departing from the scope of the present invention.

In particular, the connecting means for connecting the various component parts of assembly 4 may differ, providing they permit preassembly of pulley assembly 4. In particular, adhesive may be used.

## Claims

1. A pulley assembly (4) for a vehicle internal combustion engine (1), comprising a timing gear (5), at least one pulley (6) for driving at least one auxiliary member of the engine (1) by means of a belt, and connecting means (8) for connecting said gear (5) and said pulley (6) to a drive shaft (2) of said engine (1); **characterized by** comprising preliminary retaining means (17, 15, 28; 31, 32, 28) for connecting said gear (5), said pulley (6) and said connecting means (8) to form a preassembled subassembly connectable to the drive shaft (2) in one assembly operation.

2. An assembly as claimed in Claim 1, **characterized in that** said connecting means comprise a single axial screw (8) for connecting the whole preassembled subassembly to said drive shaft (2).

3. An assembly as claimed in any one of the foregoing Claims, **characterized by** comprising a impulse wheel (7) rotationally integral with said pulley (6).

4. An assembly as claimed in Claim 2 or 3, **characterized in that** said gear (5) is fitted to a tubular hub (15) rotationally integral with said pulley (6) and engaged by said screw (8).

5. An assembly as claimed in Claim 4, **characterized in that** said hub (15) forms part of said impulse wheel (7); said pulley (6) being fixed to said impulse wheel (7).

6. An assembly as claimed in one of Claims 1 to 3, **characterized in that** said pulley (6) is carried by and rotationally integral with said gear (5).

7. An assembly as claimed in one of Claims 2 to 6, **characterized in that** said preliminary retaining means (1, 15, 28; 31, 32, 28) comprise at least one axial retaining member (28) for preventing axial withdrawal of said screw (8).

8. An assembly as claimed in Claim 7, **characterized in that** said axial retaining member comprises a ring (28) made of elastomeric material and fitted to said screw (8).
